# EUROPEAN PATENT SPECIFICATION

(11) **EP 3 305 860 B1**
(45) Date of publication and mention of the grant of the patent: **25.03.2020**
(21) Application number: 17194292.3
(22) Date of filing: 02.10.2017
(51) Int. Cl.: C09D 5/16, C08F 230/08, C08F 293/00, C09D 143/04

(54) **COPOLYMER OF TRIISOPROPYLSILYL (METH)ACRYLATE WITH (METH)ACRYLIC ACID DERIVATIVE AND MAKING METHOD**
COPOLYMER VON TRIISOPROPYLSILYL(METH)ACRYLAT MIT (METH)ACRYLSÄURE-DERIVAT UND HERSTELLUNGSVERFAHREN
COPOLYMÈRE DE TRIISOPROPYLSILYL (MÉTH)ACRYLATE AVEC DÉRIVÉ D'ACIDE (MÉTH)ACRYLIQUE ET SON PROCÉDÉ DE FABRICATION

(30) Priority: 04.10.2016 JP 2016196079
(43) Date of publication of application: 11.04.2018
(73) Proprietor: Shin-Etsu Chemical Co., Ltd., Tokyo (JP)
(72) Inventor: ITOH, Yusuke, Joetsu-shi, Niigata (JP); KUBOTA, Tohru, Joetsu-shi, Niigata (JP)
(74) Representative: Ter Meer Steinmeister & Partner

(56) References cited:
- EP-A1- 2 161 316
- WO-A2-2015/097240
- JP-B2- 3 906 936
- SOGAH D Y ET AL: "Group Transfer Polymerization. Polymerization of Acrylic Monomers", MACROMOLECULES, AMERICAN CHEMICAL SOCIETY, US, vol. 20, no. 7, 1 January 1987 (1987-01-01), pages 1473-1488, XP002403865, ISSN: 0024-9297, DOI: 10.1021/MA00173A006
- MARLÈNE LEJARS ET AL: "Synthesis and characterization of diblock and statistical copolymers based on hydrolyzable siloxy silylester methacrylate monomers", POLYMER CHEMISTRY, vol. 5, no. 6, 4 December 2013 (2013-12-04), pages 2109-2117, XP055177302, GB ISSN: 1759-9954, DOI: 10.1039/c3py01603j

## Description

### TECHNICAL FIELD

This invention relates to a copolymer of triisopropylsilyl (meth)acrylate with a (meth)acrylic acid derivative and a method for preparing the same, and more particularly to a copolymer of triisopropylsilyl (meth)acrylate with a (meth)acrylic acid derivative which is suited as a hydrolyzable self-polishing polymer for use in antifouling paints and the like, and a method for preparing the same.

### BACKGROUND ART

Ship hulls, fishing nets and other structures which are immersed in seawater for a long term suffer the fouling problem that their surface is susceptible to settlement of marine organisms. For example, the fouling of marine organisms increases the surface roughness of ship hulls, causing to reduce the ship speed and increase the fuel cost. Also, marine fouling can clog fishing nets. For preventing marine organisms from fouling the structure, antifouling paints are typically applied to the structure surfaces.

For example, Patent Documents 1 and 2 propose water-soluble antifouling paints. These water-soluble antifouling paints are poor in water resistance and unsatisfactory in antifouling performance. Patent Document 3 discloses an antifouling paint using a non-aqueous dispersion (NAD) polymer. Since the NAD polymer is dispersed in a solvent of the paint composition, the composition is difficult to form a uniform film by coating.

On the other hand, copolymers of silyl (meth)acrylates with (meth)acrylic acid derivatives are used in antifouling paint compositions of hydrolyzable self-polishing type. Antifouling paints comprising copolymers using triisopropylsilyl acrylate or triisopropylsilyl methacrylate as the silyl (meth)acrylate component form coatings having an adequately controlled hydrolysis rate so that the coatings sustain for a long period of time. See Patent Document 4, for example.

When antifouling paints are prepared using copolymers of silyl (meth)acrylates with (meth)acrylic acid derivatives, organic solvents are used. This is because if antifouling paints have too high a viscosity during coating, they may fail to exert sufficient coating properties.

To meet the current regulations of volatile organic compounds (VOC), there is a need for environment-friendly antifouling paint. Also, from the aspect of coating operation environment, it is desired to have a paint containing less VOC.

As the means for reducing the amount of organic solvent used, Patent Document 5 intends to reduce the weight average molecular weight of a copolymer comprising silyl (meth)acrylate to lower its viscosity for thereby achieving a saving of the organic solvent.

Patent Document 6 discloses an antifouling paint composition comprising a copolymer containing a trialkylsilyl acrylate monomer having a number average molecular weight of 1000-50000 g/mol and a polydispersity index of 1.0-4.0. Patent Document 7 discloses antifouling paint compositions containing a copolymer comprising triisopropylsilyl (meth)acrylate, methyl methacrylate and a monomer c being an alkoxy (meth)acrylate.

### Citation List

Patent Document 1: JP-A 2009-173914
Patent Document 2: JP-A 2008-001804
Patent Document 3: WO 2005/042649
Patent Document 4: WO 2013/073580
Patent Document 5: JP-A 2014-205846 (USP 7691938, EP 1641862) Patent Document 6: JP-B-3906936
Patent Document 7: EP2161316A1

### SUMMARY OF INVENTION

Since the copolymer of triisopropylsilyl (meth)acrylate with a (meth)acrylic acid derivative described in Patent Document 4 has a wide polydispersity, a high molecular weight fraction may act as a flocculant to increase the viscosity of the copolymer. Then, a larger amount of organic solvent must be used.

The copolymer in Example of Patent Document 5 is given a low viscosity by reducing the weight average molecular weight. Since the copolymer is prepared by radical polymerization, it has a wide polydispersity and a number average molecular weight of less than 6,000. The influence of a low molecular weight fraction such as oligomers becomes stronger, adversely affecting the film-forming ability of the paint. Such copolymer is unacceptable on practical use.

From the aspects of environmental protection and coating operation environment, it is desired to have a paint composition having a low viscosity, a saving of VOC, and excellent antifouling properties.

An object of the invention is to provide a copolymer of monomers containing triisopropylsilyl (meth)acrylate and a (meth)acrylic acid derivative, which is used to formulate a paint composition having as low a viscosity as possible and containing a less amount of an organic solvent than the prior art paint compositions, and a method for preparing the same.

The inventors have found that by narrowing the polydispersity of a copolymer of triisopropylsilyl (meth)acrylate with a (meth)acrylic acid derivative, the influences of a low molecular weight fraction which detracts from film-forming ability and a high molecular weight fraction which contributes to a viscosity buildup can be eliminated, and the amount of an organic solvent used for paint preparation be reduced.

In one aspect, the invention provides a copolymer of monomers containing triisopropylsilyl (meth)acrylate having the general formula (1) and a (meth)acrylic acid derivative, the copolymer having a number average molecular weight of 6,000 to 100,000 and a polydispersity index (Mw/Mn) of up to 2.0. 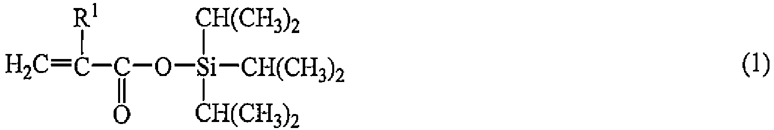 Herein R¹ is hydrogen or methyl.

Preferably the (meth)acrylic acid derivative has the general formula (2). 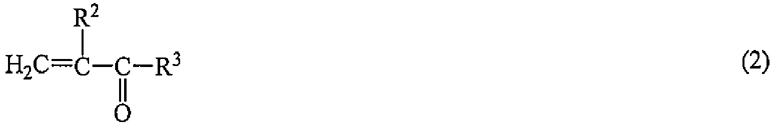 Herein R² is hydrogen or methyl and R³ is a C₁-C₂₀ alkoxy group, a C₆-C₂₀ aryloxy group, a C₁-C₂₀ monovalent hydrocarbon group (which may contain at least one divalent moiety selected from -O-, -S- and -NR- wherein R is hydrogen or a C₁-C₂₀ monovalent hydrocarbon group, with the proviso that heteroatoms such as oxygen, sulfur and nitrogen do not adjoin, and which may be substituted with silyl, carbonyl or halogen), an amino group, a siloxy group (exclusive of triisopropylsiloxy), a halogen atom or a hydroxyl group.

A copolymer comprising repeating units having the general formula (3) is preferred. 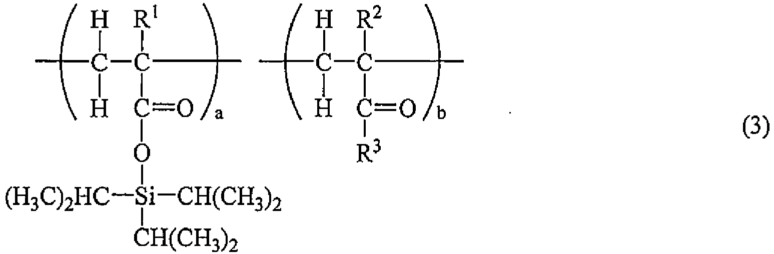 Herein R¹ to R³ are as defined above and a and b are numbers in the range: 0.2 ≤ a ≤ 0.8, 0.2 ≤ b ≤ 0.8, and a+b = 1.

A copolymer comprising repeating units having the general formula (4) is more preferred. 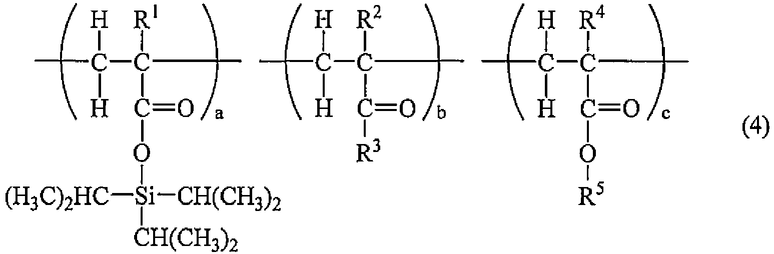 Herein R¹ to R³ are as defined above, R⁴ is hydrogen or methyl, a, b and c are numbers in the range: 0.2 ≤ a ≤ 0.8, 0.2 ≤ b ≤ 0.8, 0.2 ≤ c ≤ 0.8, and a+b+c = 1, and R⁵ is a group having the general formula (5) or (6). 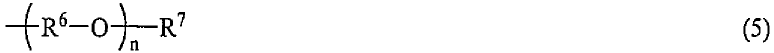 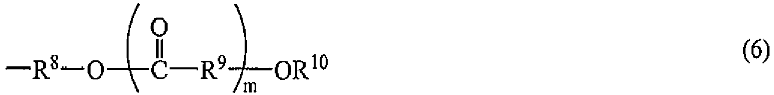 Herein R⁶ is a C₁-C₂₀ divalent hydrocarbon group which may contain -O-, with the proviso that oxygen atoms do not adjoin, R⁷ is hydrogen or a C₁-C₂₀ monovalent hydrocarbon group, n is an integer of 1 to 15, R⁸ and R⁹ each are a C₁-C₂₀ divalent hydrocarbon group, R¹⁰ is hydrogen or a C₁-C₂₀ monovalent hydrocarbon group, and m is an integer of 1 to 15.

In another aspect, the invention provides a composition comprising the copolymer defined above and an organic solvent.

Preferably, the organic solvent is an aromatic hydrocarbon solvent.

Typically the composition is for use as antifouling paint.

In a further aspect, the invention provides a method for preparing the copolymer defined above, comprising the step of effecting group-transfer polymerization of monomers containing triisopropylsilyl (meth)acrylate having the formula (1) defined above and a (meth)acrylic acid derivative in the presence of a catalyst using a silylketene acetal having the general formula (7) as an initiator. 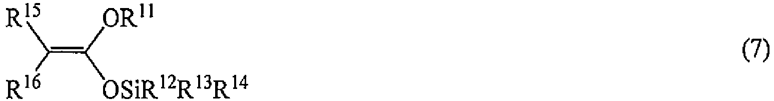 Herein R¹¹ is a C₁-C₁₀ monovalent hydrocarbon group or a substituent: SiR¹²R¹³R¹⁴, R¹² to R¹⁴ each are a C₁-C₁₀ monovalent hydrocarbon group, R¹⁵ and R¹⁶ each are hydrogen or a C₁-C₁₀ monovalent hydrocarbon group.

In a still further aspect, the invention provides a method for preparing the copolymer defined above, comprising the step of effecting atomic transfer radical polymerization of monomers containing triisopropylsilyl (meth)acrylate having the formula (1) defined above and a (meth)acrylic acid derivative in the presence of a heavy metal salt and a ligand using a halogen compound having the general formula (8) as an initiator. 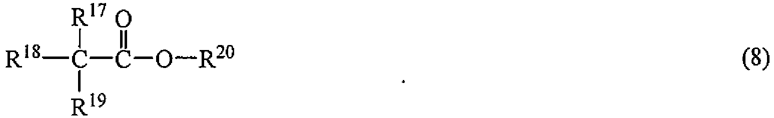 Herein R¹⁷ to R¹⁹ each are a halogen atom or C₁-C₁₀ monovalent hydrocarbon group, any one of R¹⁷ to R¹⁹ being halogen, R²⁰ is a C₁-C₂₀ monovalent hydrocarbon group which may contain oxygen, sulfur or halogen.

Preferably, the heavy metal salt is a heavy metal halide, and the ligand is an amine ligand.

In a still further aspect, the invention provides a method for preparing the copolymer defined above, comprising the step of effecting reversible addition-fragmentation chain-transfer polymerization of monomers containing triisopropylsilyl (meth)acrylate having the formula (1) defined above and a (meth)acrylic acid derivative in the presence of a sulfur-containing compound using a radical compound as an initiator.

Preferably, the radical compound is an azo compound or organic peroxide, and the sulfur-containing compound is a compound having trithiocarbonate, dithioester, thioamide, thiocarbamate or dithiocarbamate as a polymerization initiator group.

### ADVANTAGEOUS EFFECTS OF INVENTION

Since the copolymer of triisopropylsilyl (meth)acrylate with (meth)acrylic acid derivative has a narrow polydispersity and low viscosity, the amount of an organic solvent used for preparation of paint compositions can be reduced. The reduced content of organic solvent is effective for decreasing spray-dust during paint coating operation and improving the efficiency of paint coating and the leveling property of a coating. By virtue of these advantages, the copolymer is suited as an ingredient for an antifouling paint composition, specifically as a hydrolyzable self-polishing polymer in antifouling paint for ship hulls and fishing nets.

### DESCRIPTION OF PREFERRED EMBODIMENTS

As used herein, the notation (Cn-Cm) means a group containing from n to m carbon atoms per group. The term polydispersity (index) is a molecular weight distribution and given as Mw/Mn wherein Mw and Mn are weight and number average molecular weights, respectively.

The invention provides a copolymer of monomers containing triisopropylsilyl (meth)acrylate having the general formula (1) and a (meth)acrylic acid derivative, having a number average molecular weight (Mn) of 6,000 to 100,000 and a polydispersity index (Mw/Mn) of up to 2.0. The copolymer may be a random or block copolymer of triisopropylsilyl (meth)acrylate with (meth)acrylic acid derivative.

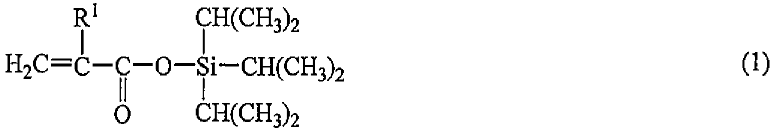

In formula (1), R¹ is hydrogen or methyl. That is, formula (1) represents triisopropylsilyl acrylate or triisopropylsilyl methacrylate, which may be used alone or in admixture.

The (meth)acrylic acid derivative has the general formula (2).

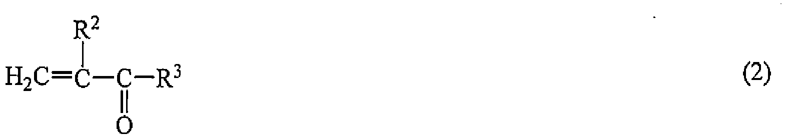

In formula (2), R² is hydrogen or methyl. R³ is an alkoxy group of 1 to 20 carbon atoms, preferably 1 to 16 carbon atoms, and more preferably 1 to 12 carbon atoms; an aryloxy group of 6 to 20 carbon atoms, preferably 6 to 16 carbon atoms, and more preferably 6 to 12 carbon atoms; a monovalent hydrocarbon group of 1 to 20 carbon atoms, preferably 1 to 16 carbon atoms, and more preferably 1 to 12 carbon atoms, which may contain at least one divalent moiety selected from -O-, -S-, and -NR- (wherein R is hydrogen or a monovalent hydrocarbon group of 1 to 20 carbon atoms, preferably 1 to 16 carbon atoms, and more preferably 1 to 12 carbon atoms), with the proviso that heteroatoms such as oxygen, sulfur and nitrogen do not adjoin each other, and which may be substituted with silyl, carbonyl or halogen; an amino group; a siloxy group (exclusive of triisopropylsiloxy); a halogen atom; or a hydroxyl group. It is noted that the alkoxy group and the hydrocarbon moiety in the monovalent hydrocarbon group may be linear, branched or cyclic.

Suitable groups R³ include linear alkoxy groups such as methoxy, ethoxy, propoxy, n-butoxy, n-pentyloxy, hexyloxy, heptyloxy, octyloxy, nonyloxy, decyloxy, dodecyloxy, octadecyloxy, vinyloxy, and allyloxy; branched alkoxy groups such as isopropoxy, isobutoxy, tert-butoxy, isopentyloxy, sec-pentyloxy, tert-pentyloxy, neopentyloxy, 1-methylpentyloxy, isooctyloxy, and isodecyloxy; cyclic alkoxy groups such as cyclohexyloxy, 4-tert-butylcyclohexyloxy, and cyclodecyloxy; aryloxy groups such as phenoxy, benzyloxy, p-methylphenoxy, naphthoxy, isobornyloxy, glycidyloxy, 2-ethyl-2-adamantyloxy, and 3-hydroxy-1-adamantyloxy; monovalent hydrocarbon groups containing -O- such as 2-ethylhexyloxy, methoxymethyloxy, ethoxymethyloxy, 2-methoxyethyloxy, 3-methoxypropyloxy, 4-methoxybutyloxy, 2-ethoxyethyloxy, 3-ethoxypropyloxy, 4-ethoxybutyloxy, 5-methoxy-3-oxa-pentyloxy, 8-methoxy-3,6-dioxaoctyloxy, 2-hydroxyethoxy, 3-hydroxypropoxy, 4-hydroxybutoxy, 5-hydroxypentyloxy, 6-hydroxyhexyloxy, and tetrahydrofurfuryloxy; monovalent hydrocarbon groups containing -S- such as methylthio and ethylthio; monovalent hydrocarbon groups containing -NR- such as N-(methoxymethyl)methylamino, N-(2-methoxyethyl)methylamino, N-(dimethylaminomethyl)methylamino, and N-(2-dimethylaminoethyl)methylamino; monovalent hydrocarbon groups containing -NR- and -O- such as dimethylaminomethyloxy, 2-dimethylaminoethyloxy, 2-diethylaminoethyloxy, 2-ethylmethylaminoethyloxy, tert-butylaminoethyloxy, 2,2,6,6-tetramethyl-4-piperidyloxy, and N-succinimidyloxy; monovalent hydrocarbon groups in which one or more or even all hydrogen atoms are substituted by silyl, such as 3-[diethoxy(methyl)silyl]propyloxy and 3-(trimethylsilyl)propyloxy; monovalent hydrocarbon groups in which some or all hydrogen atoms are substituted by carbonyl, such as 2-carboxyethyloxy, 2-methoxycarbonylethyloxy, 3-carboxypropyloxy, 3-methoxycarbonylpropyloxy, and 3-methoxy-2-carbonylpropyloxy; monovalent hydrocarbon groups in which one or more or even all hydrogen atoms are substituted by halogen, such as 2,2,3,3,4,4,5,5,6,6,7,7-dodecafluoroheptyloxy, 1,1,1,3,3,3-hexafluoroisopropoxy, 2,2,2-trifluoroethoxy, 2,2,3,3-tetrafluoropropoxy, 1H,1H,5H-octafluoropcntyloxy,1H,1H,2H,2H-nonafluorohexyloxy, 2,2,3,3,3-pentafluoropropoxy, and 1H,1H,2H,2H-tridecafluoro-n-octyloxy; amino groups, e.g., dialkylamino, alkylamino and arylamino groups such as dimethylamino, diethylamino, n-propylamino, tert-butylamino, 3-(dimethylamino)propylamino, dibutylamino, methylamino, and phenylamino; siloxy groups, e.g., trialkylsiloxy (exclusive of triisopropylsiloxy), dialkylarylsiloxy and alkyldiarylsiloxy groups such as trimethylsiloxy, trimethoxysiloxy, triethylsiloxy, tri-n-propylsiloxy, tri-n-butylsiloxy, phenyldimethylsiloxy, diphenylmethylsiloxy, methyldiethylsiloxy, ethyldimethylsiloxy, and tert-butyldimethylsiloxy; halogen atoms such as fluorine, chlorine, bromine, and iodine; and a hydroxyl group.

Examples of R in the monovalent hydrocarbon group containing -NR- include saturated hydrocarbon groups, typically linear alkyl groups such as methyl, ethyl, n-propyl, n-butyl, n-hexyl, n-heptyl, n-octyl, n-nonyl, and n-decyl, branched alkyl groups such as isopropyl, isobutyl, sec-butyl, tert-butyl, isopentyl, 2-pentyl, 3-pentyl, and tert-pentyl, and cyclic alkyl groups such as cyclopropyl, cyclohexyl, cyclopentyl, and cyclooctyl; unsaturated hydrocarbon groups including alkenyl groups such as vinyl, allyl, 1-propenyl, 1-methylpropenyl, butenyl, pcntcnyl, hexenyl, heptenyl, octenyl, nonenyl, decenyl, undecenyl, and octadecenyl and alkynyl groups such as ethynyl and propynyl; aryl groups such as phenyl, tolyl, xylyl, mesityl, naphthyl, and biphenyl; and aralkyl groups such as benzyl, phenethyl, phenylpropyl, and phenylbutyl.

Examples of the (meth)acrylic acid derivative include (meth)acrylic acid, (meth)acrylates such as methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, pentyl (meth)acrylate, hexyl (meth)acrylate, 2,3,4-trimethylhexyl (meth)acrylate, heptyl (meth)acrylate, octyl (meth)acrylate, isooctyl (meth)acrylate, nonyl (meth)acrylate, decyl (meth)acrylate, isodedyl (meth)acrylate, dodecyl (meth)acrylate, octadecyl (meth)acrylate, vinyl (meth)acrylate, allyl (meth)acrylate, cyclohexyl (meth)acrylate, 4-tert-butylcyclohexyl (meth)acrylate, cyclodecyl (meth)acrylate, dicyclopentanyl (meth)acrylate, benzyl (meth)acrylate, phenyl (meth)acrylate, p-methylphenyl (meth)acrylate, naphthyl (meth)acrylate, isobornyl (meth)acrylate, 2-ethyl-2-adamantyl (meth)acrylate, 2-ethylhexyl (meth)acrylate, dimethylaminomethyl (meth)acrylate, diethylaminomethyl (meth)acrylate, 2-dimethylaminoethyl (meth)acrylate, 2-diethylaminoethyl (meth)acrylate, 2-ethylmethylaminoethyl (meth)acrylate, tert-butylaminoethyl (meth)acrylate, 2,2,6,6-tetramethyl-4-piperidine (meth)acrylate, N-succinimidyl (meth)acrylate, trimethylsilyl (meth)acrylate, trimethoxysilyl (meth)acrylate, triethoxysilyl (meth)acrylate, triethylsilyl (meth)acrylate, tri-n-butylsilyl (meth)acrylate, trimethylsilyl (meth)acrylate, triethylsilyl (meth)acrylate, tripropylsilyl (meth)acrylate, tri-n-butylsilyl (meth)acrylate, dimethylphenylsilyl (meth)acrylate, methyldiphenylsilyl (meth)acrylate, triphenylsilyl (meth)acrylate, diethylmethylsilyl (meth)acrylate, ethyldimethylsilyl (meth)acrylate, tert-butyldimethylsilyl (meth)acrylate, 3-[diethoxy(methyl)silyl]propyl (meth)acrylate, 3-(trimethylsilyl)propyl (meth)acrylate, 2,2,3,3,4,4,5,5,6,6,7,7-dodecafluoroheptyl (meth)acrylate, 1,1,1,3,3,3-hexafluoroisopropyl (meth)acrylate, 2,2,2-trifluoroethyl (meth)acrylate, 2,2,3,3-tetrafluoropropyl (meth)acrylate, 1H,1H,5H-octafluoropentyl (meth)acrylate, 1H,1H,2H,2H-nonafluorohexyl (meth)acrylate, 2,2,3,3,3-pentafluoropropyl (meth)acrylate, and 1H,1H,2H,2H-tridecafluoro-n-octyl (meth)acrylate; (meth)acrylic amides such as (meth)acrylamide, N-propyl(meth)acrylamide, N-isopropyl(meth)acrylamide, N-tert-butyl(meth)acrylamide, N-[3-(dimethylamino)-propyl] (meth)acrylamide, N-phenyl(meth)acrylamide, N,N-dimethyl(meth)acrylamide, N,N-diethyl(meth)acrylamide, N-(methoxymethyl)methyl(meth)acrylamide, N-(2-methoxyethyl)methyl(meth)acrylamide, N-(dimethylaminomethyl)methyl(meth)-acrylamide, and N-(2-dimethylaminoethyl)methyl(meth)acrylamide; S-methyl thiomethacrylate, S-thioethyl thio(meth)acrylate, (meth)acryloyl chloride, and (meth)acryloyl bromide, which are compounds corresponding to repeating unit (b) in the general formulae (3) and (4).

Examples of the (meth)acrylic acid derivative also include dicyclopentanyloxyethyl (meth)acrylate, glycidyl (meth)acrylate, 3-hydroxy-1-adamantyl (meth)acrylate, methoxymethyl (meth)acrylate, ethoxymethyl (meth)acrylate, 2-methoxyethyl (meth)acrylate, 3-methoxypropyl (meth)acrylate, 4-methoxybutyl (meth)acrylate, 5-methoxy-3-oxapentyl (meth)acrylate, 8-methoxy-3,6-dioxaoctyl (meth)acrylate, 2-ethoxyethyl (meth)acrylate, 3-ethoxypropyl (meth)acrylate, 4-ethoxybutyl (meth)acrylate, 2-hydroxyethyl (meth)acrylate, 3-hydroxypropyl (meth)acrylate, 4-hydroxybutyl (meth)acrylate, 5-hydroxypentyl (meth)acrylate, 6-hydroxyhexyl (meth)acrylate, poly(ethylene glycol) (meth)acrylate, poly(propylene glycol) (meth)acrylate, and tetrahydrofurfuryl (meth)acrylate, which are compounds corresponding to repeating unit (c) in the general formula (4).

The copolymer obtained from the above monomers contains repeating units having the general formula (3).

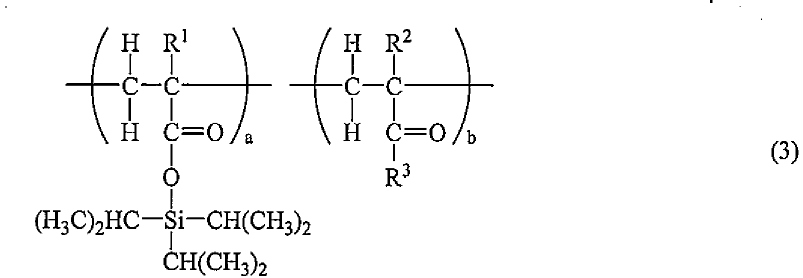

Herein R¹ to R³ are as defined above. From the aspects of stable coating solubility and long-term antifouling performance of an antifouling paint composition, a and b are numbers in the range: 0.2 ≤ a ≤ 0.8, 0.2 ≤ b ≤ 0.8, preferably 0.2 ≤ a ≤ 0.75, 0.25 ≤ b ≤ 0.8, and more preferably 0.2 ≤ a ≤ 0.7, 0.3 ≤ b s 0.8 and a+b = 1.

More preferably, the copolymer contains repeating units having the general formula (4).

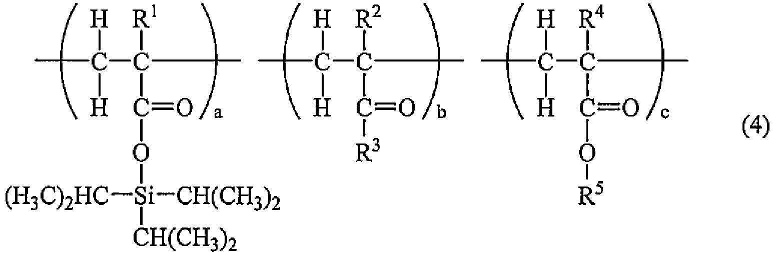

Herein R⁴ is hydrogen or methyl, and R⁵ is a substituent group having the general formula (5) or (6). From the aspects of stable coating solubility and long-term antifouling performance of an antifouling paint composition, a, b and c are numbers in the range: 0.2 ≤ a≤ 0.8, 0.2 ≤ b ≤ 0.8, 0.2 ≤ c ≤ 0.8, preferably 0.25 ≤ a ≤ 0.8,0.2 ≤ b ≤ 0.75, 0.2 ≤ c ≤ 0.75, and more preferably 0.3 ≤ a ≤ 0.8, 0.2 ≤ b ≤ 0.7, 0.2 ≤ c ≤ 0.7 and a+b+c = 1.

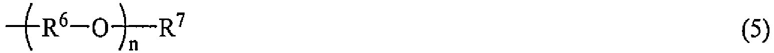

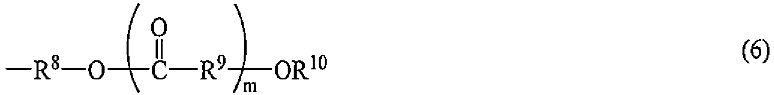

In formula (5), R⁶ is a divalent hydrocarbon group of 1 to 20 carbon atoms, preferably 1 to 16 carbon atoms, and more preferably 1 to 12 carbon atoms, which may contain -O-, with the proviso that oxygen atoms do not adjoin, R⁷ is hydrogen or a monovalent hydrocarbon group of 1 to 20 carbon atoms, preferably 1 to 16 carbon atoms, and more preferably 1 to 12 carbon atoms, and n is an integer of 1 to 15.

In formula (6), R⁸ and R⁹ each are a divalent hydrocarbon group of 1 to 20 carbon atoms, preferably 1 to 16 carbon atoms, and more preferably 1 to 12 carbon atoms, R¹⁰ is hydrogen or a monovalent hydrocarbon group of 1 to 20 carbon atoms, preferably 1 to 16 carbon atoms, and more preferably 1 to 12 carbon atoms, and m is an integer of 1 to 15. It is noted that the hydrocarbon moiety in the hydrocarbon group may be linear, branched or cyclic.

Examples of the monovalent hydrocarbon groups R⁷ and R¹⁰ include saturated hydrocarbon groups including linear alkyl groups such as methyl, ethyl, n-propyl, n-butyl, n-hexyl, n-heptyl, n-octyl, n-nonyl, and n-decyl, branched alkyl groups isopropyl, isobutyl, sec-butyl, tert-butyl, isopentyl, 2-pentyl, 3-pentyl, and tert-pentyl, and cyclic alkyl groups such as cyclopropyl, cyclohexyl, cyclopentyl, and cyclooctyl; unsaturated hydrocarbon groups including alkenyl groups such as vinyl, allyl, 1-propenyl, 1-methylpropenyl, butenyl, pentenyl, hexenyl, heptenyl, octenyl, nonyl, decenyl, undecenyl, and octadecenyl and alkynyl groups such as ethynyl and propynyl; aryl groups such as phenyl, tolyl, xylyl, mesityl, naphthyl, and biphenyl; and aralkyl groups such as benzyl, phenethyl, phenylpropyl, and phenylbutyl.

Examples of the divalent hydrocarbon groups R⁶, R⁸ and R⁹ include C₁-C₂₀ alkylene groups such as methylene, ethylene, trimethylene, propylene, tetramethylene, and pentamethylene.

Examples of the substituent group having the formula (5) include hydroxyalkyl groups such as hydroxymethyl, 2-hydroxyethyl, 3-hydroxypropyl, 4-hydroxybutyl, 5-hydroxypentyl, and 6-hydroxyhexyl; alkoxyalkyl groups such as methoxymethyl, ethoxymethyl, 2-methoxyethyl, 3-methoxypropyl, 4-methoxybutyl, 2-ethoxyethyl, 3-ethoxypropyl, and 4-ethoxybutyl; and groups wherein R⁶ contains an ether bond, such as 5-methoxy-3-oxa-pentyl, 8-methoxy-3,6-dioxaoctyl, 11-methoxy-3,6,9-trioxaundecyl, 7-methoxy-4-oxaheptyl, 9-methoxy-5-oxanonyl, 5-ethoxy-3-oxapentyl, 8-ethoxy-3,6-dioxaoctyl, and 9-ethoxy-5-oxanonyl.

Examples of the substituent group having the formula (6) include carbonyl-containing groups such as 2-(3-methoxypropyl)carbonyloxyethyl, 2-(4-methoxybutyl)carbonyloxyethyl, 2-(5-methoxypentyl)carbonyloxyethyl, 3-(3-methoxypropyl)carbonyloxypropyl, 3-(4-methoxybutyl)carbonyloxypropyl, 3-(5-methoxypentyl)carbonyloxypropyl, 4-(3-methoxypropyl)carbonyloxybutyl, 4-(4-methoxybutyl)carbonyloxybutyl, 4-(5-methoxypentyl)carbonyloxybutyl, 2-(3-hydroxypropyl)carbonyloxyethyl, 2-(4-hydroxybutyl)carbonyloxyethyl, 2-(5-hydroxypentyl)carbonyloxyethyl, 3-(3-hydroxypropyl)carbonyloxypropyl, 3-(4-hydroxybutyl)carbonyloxypropyl, 3-(5-hydroxypentyl)carbonyloxypropyl, 4-(3-hydroxypropyl)carbonyloxybutyl, 4-(4-hydroxybutyl)carbonyloxybutyl, and 4-(5-hydroxypentyl)carbonyloxybutyl.

Copolymerization of components having these substituent groups enables to hydrophilize the surface of a coating as applied and adjust the self-polishing ability.

The copolymer should have a number average molecular weight (Mn) of 6,000 to 100,000. With Mn in the range, a coating does not become brittle and the hydrolysis rate thereof is adequately suppressed. Mn is preferably 7,000 to 70,000, more preferably 9,000 to 50,000. If Mn is less than 6,000, the paint composition may have poor film-forming ability.

Also the copolymer should have a polydispersity (Mw/Mn) of up 1.6 from the aspect of eliminating the influences of high and low molecular weight fractions. If Mw/Mn of the copolymer exceeds 2.0, a high molecular weight fraction may act as a flocculant to increase the viscosity of the copolymer. If a low molecular weight fraction is included, it may detract from the film-forming ability of the paint. The lower limit of polydispersity is preferably 1.0 though not critical.

The Mn and Mw/Mn are determined by gel permeation chromatography (GPC) versus polystyrene standards under the following GPC conditions.

**GPC conditions**

| | |
|---|---|
| Analyzer: | HLC-8220GPC (Tosoh Co., Ltd.) |
| Column: | KF-402.5HQ (4.6 mm × 250 mm) + KF-404HQ (4.6 mm × 250 mm) (Shodex) |
| Eluent: | tetrahydrofuran (THF) |
| Flow rate: | 0.35 mL/min |
| Detector: | RI |
| Column oven temperature: | 40°C |
| Standards: | polystyrene |

Now the method for preparing the copolymer is described. The copolymer is obtained from polymerization of triisopropylsilyl (meth)acrylate of formula (1), a (meth)acrylic acid derivative, and an initiator in the presence of a catalyst.

The polymerization technique which is preferred from the aspect of a narrow polydispersity is living polymerization. Examples of the living polymerization include well-known living anion polymerization, living radical polymerization, and living cation polymerization. Inter alia, group-transfer polymerization (GTP) which is one type of living anion polymerization, atomic transfer radical polymerization (ATRP) which is one type of living radical polymerization, and reversible addition-fragmentation chain-transfer polymerization (RAFT) are especially preferred because a degree of monomer conversion is relatively high and a (meth)acrylate polymer having a narrow polydispersity can be produced.

First, the group-transfer polymerization (GTP) is described. The GTP is a technique for polymerizing (meth)acrylates in the presence of a catalyst using a silylketene acetal having the general formula (7) as an initiator. Specifically, any two of the monomer, catalyst and initiator are mixed prior to reaction. When the remaining one is added thereto, polymerization starts. The order of addition is not critical. Polymerization starts even when they are added in any order.

In copolymerization using two or more monomers, the reactor may be charged with all monomers at the start of the reaction. Alternatively, the reaction may start with one or two monomers. Once the reaction reaches the desired rate of polymerization, the remaining monomers may be added one after another to yield a block copolymer.

The silylketene acetal used as the initiator in the GTP technique has the general formula (7).

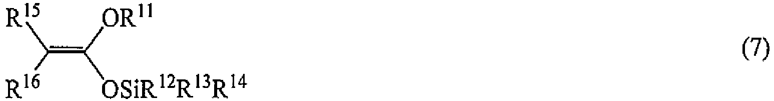

Herein R¹¹ is a monovalent hydrocarbon group of 1 to 10 carbon atoms, preferably 1 to 8 carbon atoms, and more preferably 1 to 6 carbon atoms, or a substituent group: SiR¹²R¹³R¹⁴, and R¹² to R¹⁴ each are a monovalent hydrocarbon group of 1 to 10 carbon atoms, preferably 1 to 8 carbon atoms, and more preferably 1 to 6 carbon atoms. Examples of the substituent group: SiR¹²R¹³R¹⁴ include trimethylsilyl, triethylsilyl, triisopropylsilyl, triisobutylsilyl, triphenylsilyl, methyldiphenylsilyl, and dimethylphenylsilyl.

R¹⁵ and R¹⁶ each are a monovalent hydrocarbon group of 1 to 10 carbon atoms, preferably 1 to 8 carbon atoms, and more preferably 1 to 6 carbon atoms, or hydrogen.

Examples of these monovalent hydrocarbon groups are as illustrated above for R⁷ and R¹⁰ while their hydrocarbon moiety may be either linear, branched or cyclic.

Examples of the compound having formula (7) include methyl(trimethylsilyl)dimethylketene acetal, methyl(triethylsilyl)dimethylketene acetal, methyl(triisopropylsilyl)dimethylketene acetal, methyl(triisobutylsilyl)dimethylketene acetal, methyl(trimethylsilyl)diethylketene acetal, methyl(triphenylsilyl)dimethylketene acetal, methyl(methyldiphenylsilyl)dimethylketene acetal, methyl(dimethylphenylsilyl)dimethylketene acetal, bis(trimethylsilyl)dimethylketene acetal, bis(triethylsilyl)dimethylketene acetal, and bis(triisopropylsilyl)dimethylketene acetal. Inter alia, preference is given to methyl(trimethylsilyl)dimethylketene acetal, methyl(triethylsilyl)dimethylketene acetal, methyl(triisopropylsilyl)dimethylketene acetal, and bis(trimethylsilyl)dimethylketene acetal, from the standpoint of a high degree of conversion of monomers.

Suitable catalysts include onium compounds having a counter anion in the form of fluorine, azide, cyanide, carboxylate, or a salt with conjugated acid of the foregoing, metal fluorides, organophosphorus compounds, imidazolium salts, Lewis acids, and Bronsted acids. Of these, the onium compounds, Lewis acids and Bronsted acids are preferred because a copolymer with a narrow polydispersity is obtainable.

Examples include onium compounds such as tetrabutylammonium fluoride, tetrabutylammonium bifluoride, tetraethylammonium fluoride, tetramethylammonium fluoride, tetrabutylammonium acetate, tetrabutylammonium biacetate, tetrabutylammonium benzoate, tetrabutylammonium m-chlorobenzoate, tetrabutylammonium bibenzoate, tetrabutylammonium cyanide, tris(dimethylamino)sulfonium difluorotrimethylsilicate, tris(dimethylamino)sulfonium azide, tris(dimethylamino)sulfonium cyanide, and tris(dimethylamino)sulfonium bifluoride; metal fluorides such as potassium fluoride, sodium fluoride, and cesium fluoride; organophosphorus compounds such as phosphazene bases and tris(2,4,6-trimethoxyphenyl)phosphine; imidazolium salts such as 1,3-diisopropyl-4,5-dimethylimidazol-2-ylidene, 1,3-diisopropylimidazol-2-ylidene, and 1,3-di-tert-butylimidazol-2-ylidene; Lewis acids such as zinc chloride, zinc bromide, zinc iodide, diethylaluminum chloride, ethylaluminum chloride, dimethyl aluminum chloride, diisobutylaluminum chloride, aluminum chloride, titanium(IV) chloride, tris(pentafluorophenyl)borane, triphenylmethyl tetrakis(pentafluorophenyl)borate, and N-(trimethylsilyl)bis(trifluoromethanesulfonyl)imide; and Bronsted acids such as bis(trifluoromethanesulfonyl)imide and 2,3,4,5,6-pentafluorophenylbis(trifluoromethanesulfonyl)methane. Inter alia, preference is given to tetrabutylammonium compounds such as tetrabutylammonium bifluoride, tetrabutylammonium acetate, tetrabutylammonium biacetate, tetrabutylammonium benzoate, tetrabutylammonium m-chlorobenzoate, and tetrabutylammonium bibenzoate; tris(dimethylamino)sulfonium difluorotrimethylsilicate, N-(trimethylsilyl)bis(trifluoromethanesulfonyl)imide, and 2,3,4,5,6-pentafluorophenylbis(trifluoromethanesulfonyl)methane.

In the GTP, the molecular weight may be set depending on the amount of the initiator, silylketene acetal of formula (7) used.

Since the degree of polymerization corresponds to (moles of monomer)/(moles of initiator), the degree of polymerization multiplied by the molecular weight of the monomer and the conversion of the monomer gives the theoretical molecular weight. Thus, once the amounts of the monomer and the initiator used are properly selected, a copolymer having a certain molecular weight is obtainable.

The initiator is preferably used in an amount of 0.001 to 0.2 equivalent, more preferably 0.005 to 0.15 equivalent, and most preferably 0.01 to 0.1 equivalent based on the entire monomers used. As long as the initiator is used within the range, a desired copolymer is prepared in high yields.

The amount of the catalyst used is not particularly limited. From the aspects of reactivity and productivity, the catalyst is preferably used in an amount of 0.0001 to 1 mole, more preferably 0.0005 to 0.1 mole, and most preferably 0.001 to 0.05 mole per mole of the silylketene acetal of formula (7). The reaction temperature is preferably in a range of -100°C to 200°C, more preferably -50°C to 100°C, and even more preferably 0°C to 50°C, though not limited thereto. The reaction time is preferably 0.1 to 30 hours, more preferably 0.5 to 20 hours, even more preferably 1 to 10 hours, though not limited thereto. Although the ambient atmosphere is acceptable, an inert gas atmosphere such as nitrogen or argon is preferred.

Although the polymerization reaction may take place in a solventless system, a solvent may be used. Suitable solvents include hydrocarbon solvents such as pentane, hexane, cyclohexane, heptane, isooctane, toluene, xylene, and mesitylene; aprotic polar solvents such as ethyl acetate, acetonitrile, propionitrile, N,N-dimethylformamide, and N-methylpyrrolidone; halogenated hydrocarbon solvents such as dichloromcthane, dichloroethane, and chlorobenzene; and ether solvents such as diethyl ether, tetrahydrofuran, dioxane, and dimethoxyethane. These solvents may be used alone or in admixture of two or more. Inter alia, toluene, xylene, mesitylene and tetrahydrofuran are preferred.

The copolymer obtained from GTP has a structure which contains the initiator's silyl group at one end of the copolymer after the completion of reaction. The silyl group at one end of the copolymer may be converted to a carboxylic acid or ester by addition of water or alcohol. Suitable alcohols include methanol, ethanol, 1-propanol, 2-propanol, 1-butanol, and 2-butanol. The amount of the water or alcohol used is not particularly limited. The water or alcohol is preferably used in an amount of 0.1 to 10 moles, more preferably 0.5 to 7 moles, and most preferably 1 to 5 moles per mole of the initiator.

Next, the atomic transfer radical polymerization (ATRP) is described.

The ATRP is a technique for polymerizing (meth)acrylate in the presence of a heavy metal salt and a ligand using a halogen compound having the general formula (8) as an initiator. Specifically, the reactor is charged with the monomer, heavy metal salt, ligand and initiator prior to reaction. When the reactor is heated, polymerization starts.

In copolymerization using two or more monomers, the reactor may be charged with all monomers at the start of the reaction. Alternatively, the reaction may start with one or two monomers. Once the desired rate of polymerization is reached, the remaining monomers may be added one after another to yield a block copolymer.

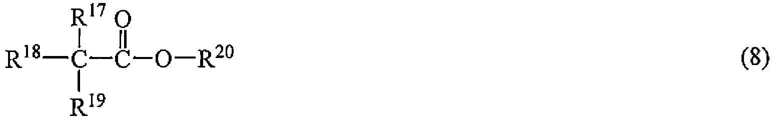

In formula (8), R¹⁷ to R¹⁹ each are a halogen atom or a monovalent hydrocarbon group of 1 to 10 carbon atoms, preferably 1 to 8 carbon atoms, more preferably 1 to 6 carbon atoms, with the proviso that any one of R¹⁷ to R¹⁹ is halogen. R²⁰ is a monovalent hydrocarbon group of 1 to 20 carbon atoms, preferably 1 to 15 carbon atoms, more preferably 1 to 12 carbon atoms, which may contain an oxygen, sulfur or halogen atom.

Examples of these monovalent hydrocarbon groups are as illustrated above for R⁷ and R¹⁰ while their hydrocarbon moiety may be either linear, branched or cyclic.

Examples of the halogen compound having formula (8) include tert-butyl 2-bromoisobutyrate, methyl 2-bromoisobutyrate, ethyl 2-bromoisobutyrate, 2-hydroxycthyl 2-bromoisobutyrate, ethylene bis(2-bromoisobutyratc), bis[2-(2-bromoisobutyloxy)ethyl]disulfide, 10-undecenyl 2-bromoisobutyrate, dodecyl 2-bromoisobutyrate, and octadecyl 2-bromoisobutyrate. Of these, methyl 2-bromoisobutyrate, ethyl 2-bromoisobutyrate, 10-undecenyl 2-bromoisobutyrate, and dodecyl 2-bromoisobutyrate are preferred from the standpoint of a high polymerization initiation ability.

The heavy metal salt is typically a heavy metal halide, examples of which include copper halides such as copper(I) bromide, copper(II) bromide, copper(I) chloride and copper(II) chloride; titanium halides such as titanium(II) chloride, titanium(III) chloride, titanium(IV) chloride and titanium(IV) bromide; iron halides such as iron(II) chloride, iron(III) chloride, iron(II) bromide, and iron(III) bromide; cobalt halides such as cobalt(II) chloride and cobalt(II) bromide; nickel halides such as nickel(II) chloride and nickel(II) bromide; molybdenum halides such as molybdenum(III) chloride and molybdenum(V) chloride; and ruthenium halides such as ruthenium(III) chloride. Of these, copper(I) bromide and copper(I) chloride are preferred from the standpoint of a high polymerization initiation ability.

The ligand is typically an amine ligand, examples of which include bidentate ligands such as 2,2'-bipyridine, 4,4'-dinonyl-2,2'-bipyridine, N-(butyl)-2-pyridylmethanimine, and N-(octyl)-2-pyridylmethanimine; tridentate ligands such as N,N,N',N",N"-pentamethyldiethylenetriamine; and tetradentate ligands such as N-propyl-N,N-di(2-pyridylmethyl)amine, 1,1,4,7,10,10-hexamethyltriethylenetetramine, hexamethyltris(2-aminoethyl)amine, N,N-bis(2-dimethylaminoethyl)-N,N'-dimethylethylenediamine, tris(2-pyridylmethyl)amine, tris[2-(dimethylamino)ethyl]amine, 1,4,8,11-tetrazacyclotetradecane, 1,4,8,11-tetramethyl-1,4,8,11-tetrazacyclotetradecane, and N,N,N',N'-tetrakis(2-pyridylmethyl)ethylenediamine. Of these, 2,2'-bipyridine, 4,4' -dinonyl-2,2' -bipyridine, N,N,N' ,N",N"-pentamethyldiethylenetriamine, 1,1,4,7,10,10-hexamethyltriethylenetetramine, tris[2-(dimethylamino)ethyl]amine, and tris(2-pyridylmethyl)amine are preferred for increasing polymerization activity and obtaining a copolymer with a narrow polydispersity.

In the ATRP, the molecular weight may be set depending on the amount of the compound of formula (8) used as initiator. The initiator is preferably used in an amount of 0.001 to 0.2 equivalent, more preferably 0.003 to 0.15 equivalent, and most preferably 0.005 to 0.1 equivalent based on the entire monomers used. As long as the initiator is used within the range, a desired copolymer is prepared in high yields. The heavy metal salt is used in an amount of 0.001 to 0.2 equivalent, more preferably 0.003 to 0.15 equivalent, and most preferably 0.005 to 0.1 equivalent based on the entire monomers used although the amount is not limited thereto. The ligand is used in an amount of 0.001 to 0.2 equivalent, more preferably 0.003 to 0.15 equivalent, and most preferably 0.005 to 0.1 equivalent based on the entire monomers used although the amount is not limited thereto.

The reaction temperature is preferably in a range of -50°C to 200°C, more preferably 0°C to 150°C, and even more preferably 20°C to 130°C, though not limited thereto. The reaction time is preferably 1 to 30 hours, more preferably 3 to 20 hours, even more preferably 5 to 10 hours, though not limited thereto. Although the ambient atmosphere is acceptable, an inert gas atmosphere such as nitrogen or argon is preferred.

Although the polymerization reaction may take place in a solventless system, a solvent may be used. Suitable solvents include hydrocarbon solvents such as pentane, hexane, cyclohexane, heptane, isooctane, toluene, xylene, and mesitylene; aprotic polar solvents such as ethyl acetate, acetonitrile, acetone, propionitrile, N,N-dimethylformamide, and N-methylpyrrolidone; protic polar solvents such as water, methanol, ethanol, and hexafluoro-2-propanol; halogenated hydrocarbon solvents such as dichloromethane, dichloroethane, and chlorobenzene; and ether solvents such as diethyl ether, tetrahydrofuran, dioxane, and dimethoxyethane. These solvents may be used alone or in admixture of two or more. Inter alia, toluene, xylene, mesitylene, ethyl acetate, acetone, methanol, ethanol and N,N-dimethylformamide are preferred.

Next, the reversible addition-fragmentation chain-transfer polymerization (RAFT) is described.

The RAFT is a technique for polymerizing (meth)acrylate in the presence of a sulfur-containing compound as a chain-transfer agent (RAFT agent) using a radical compound as an initiator. Specifically, the reactor is charged with the monomer, radical initiator and RAFT agent prior to reaction. When the reactor is heated, polymerization starts.

In copolymerization using two or more monomers, the reactor may be charged with all monomers at the start of the reaction. Alternatively, the reaction may start with one or two monomers. Once the desired rate of polymerization is reached, the remaining monomers may be added one after another to yield a block copolymer.

Suitable radical compounds used as the initiator include azo compounds and organic peroxides. Suitable azo compounds include 1,1'-azobis(cyclohexanecarbonitrile), 2,2'-azobis(4-methoxy-2,4-dimethylvaleronitrile), 2,2'-azobis(2,4-dimethylvaleronitrile), 2,2'-azobis(isobutyronitrile), 2,2'-azobis(2-methylbutyronitrile), 2,2'-azobis[2-(2-imidazolin-2-yl)propane]dihydrochloride, 2,2'-azobis[2-(2-imidazolin-2-yl)propane], 2,2'-azobis(2-aminopropane)dihydrochloride, 2,2'-azobis[N-(2-carboxyethyl)-2-methylpropionamidine]-n-hydrate, 2,2'-azobis[2-methyl-N-(2-hydroxyethyl)propionamide], 2,2'-azobis[N-(2-propenyl)-2-methylpropionamide], 2,2' -azobis(N-butyl-2-methylpropionamide), dimethyl-2,2' -azobis(isobutyrate), and 4,4'-azobis(4-cyanovaleric acid). Of these, 1,1'-azobis(cyclohexanecarbonitrile), 2,2'-azobis(isobutyronitrile), 2,2'-azobis(2-methylbutyronitrile), 2,2'-azobis(2-aminopropane)dihydrochloride, and 4,4'-azobis(4-cyanovaleric acid) are preferred for increasing the conversion rate of monomers.

Examples of the organic peroxide include di-tert-butyl peroxide, tert-butyl hydroperoxide, and benzoyl peroxide.

Examples of the sulfur-containing compound used as the chain-transfer agent (RAFT agent) include compounds having trithiocarbonate, dithioester, thioamide, thiocarbamate or dithiocarbamate as a polymerization initiator group. Of these, compounds having trithiocarbonate and dithioester are preferred for increasing the conversion rate of monomers and obtaining a copolymer with a narrow polydispersity.

Specific examples of the chain-transfer agent (RAFT agent) include 4-cyano-4-[(dodecylsulfanylthiocarbonyl)sulfanyl]pentanoic acid, 2-cyano-2-propyldodecyltrithiocarbonate, 4-cyano-4-[(dodecylsulfanylthiocarbonyl)sulfanyl]pentanol, poly(ethylene glycol) methyl ether 4-cyano-4-[(dodecylsulfanylthiocarbonyl)sulfanyl]-pentanoate (av. Mn = 10,400), poly(ethylene glycol) methyl ether 4-cyano-4-pentanoate dodecyltrithiocarbonate (av. Mn = 5,400), poly(ethylene glycol) methyl ether 4-cyano-4-pentanoate dodecyltrithiocarbonate (av. Mn = 2,400), poly(ethylene glycol) methyl ether 4-cyano-4-pentanoate dodecyltrithiocarbonate (av. Mn - 1,400), 2-phenyl-2-propylbenzodithioate, 1-(methoxycarbonyl)ethyl benzodithioate, 1-(methoxycarbonyl)ethyl benzodithioate, 2-cyano-2-propyl-4-cyanobenzodithioate, 4-cyano-4-(phenylcarbonothioylthio)pentanoic acid, 2-cyano-2-propyl benzodithioate, benzyl benzodithioate, ethyl 2-methyl-2-(phenylthiocarbonylthio)propionate, methyl 2-phenyl-2-(phenylcarbonothioyl)acetate, ethyl 2-(phenylcarbonothioylthio)propionate, 2-(dodecylthiocarbonothioylthio)propionic acid, 2-(dodecylthiocarbonothioylthio)-2-methylpropionic acid, 2-(dodecylthiocarbonothioylthio)-2-methylpropionate, 2-(dodecylthiocarbonothioylthio)-2-methylpropionic acid N-hydroxysuccinimide ether, poly(ethylene glycol) methyl ether 2-methyl-2-propionic acid dodecyltrithiocarbonate (av. Mn = 10,400), poly(ethylene glycol) bis[2-(dodecylthiocarbonothio)-2-methylpropionate] (av. Mn = 10,800), 2-(dodecylthiocarbonothio)-2-methylpropionic acid 3-azido-1-propanol, 2-(dodecylthiocarbonothio)-2-methylpropionic acid pentafluorophenyl, poly(ethylene glycol) methyl ether 2-(dodecylthiocarbonothio)-2-methylpropionate (av. Mn = 1,100), poly(ethylene glycol) methyl ether 2-(dodecylthiocarbonothio)-2-methylpropionate (av. Mn = 5,000), poly(ethylene glycol) methyl ether 2-(dodecylthiocarbonothio)-2-methylpropionate (av. Mn = 2,000), cyanomethyldodecyl trithiocarbonate, poly(ethylene glycol) bis[2-(dodecylthiocarbonothioylthio)-2-methylpropionate] (av. Mn = 5,700), cyanomethyl(phenyl)carbamodithioate, benzyl-1H-pyrrole-1-carbodithioate, bis(thiobenzoyl)disulfide, and bis(dodecylsulfanylthiocarbonyl)disulfide.

In the RAFT, the molecular weight may be set depending on the amount of the RAFT agent used. The RAFT agent is preferably used in an amount of 0.001 to 0.2 equivalent, more preferably 0.003 to 0.15 equivalent, and most preferably 0.005 to 0.1 equivalent based on the entire monomers used. As long as the RAFT agent is used within the range, a desired copolymer is prepared in high yields.

From the standpoints of reactivity and productivity, the amount of the radical initiator used is preferably 0.0002 to 0.04 equivalent, more preferably 0.0006 to 0.03 equivalent, and most preferably 0.001 to 0.02 equivalent based on the entire monomers used, but not limited thereto.

The reaction temperature is preferably in a range of -50°C to 200°C, more preferably 0°C to 150°C, and even more preferably 20°C to 130°C, though not limited thereto. The reaction time is preferably 1 to 30 hours, more preferably 3 to 20 hours, even more preferably 5 to 10 hours, though not limited thereto. Although the ambient atmosphere is acceptable, an inert gas atmosphere such as nitrogen or argon is preferred.

Although the polymerization reaction may take place in a solventless system, a solvent may be used. Suitable solvents include hydrocarbon solvents such as pentane, hexane, cyclohexane, heptane, isooctane, toluene, xylene, and mesitylene; aprotic polar solvents such as ethyl acetate, acetonitrile, acetone, propionitrile, N,N-dimethylformamide, and N-methylpyrrolidone; protic polar solvents such as water, methanol, ethanol, and hexafluoro-2-propanol; halogenated hydrocarbon solvents such as dichloromethane, dichloroethane, and chlorobenzene; and ether solvents such as diethyl ether, tetrahydrofuran, dioxane, and dimethoxyethane. These solvents may be used alone or in admixture of two or more. Inter alia, toluene, xylene, mesitylene, ethyl acetate, tetrahydrofuran, methanol, ethanol and N,N-dimethylformamide are preferred.

A further embodiment of the invention is a composition comprising at least the copolymer defined above and an organic solvent. The composition may be used for resin modifiers, pigment dispersants, and the like as well as antifouling paints. In the composition, the content of the copolymer is 20 to 90 wt%, preferably 30 to 80 wt% based on the total weight of the composition.

Suitable organic solvents include aromatic hydrocarbon solvents such as toluene, xylene, and ethylbenzene; ketone solvents such as methyl ethyl ketone, methyl isobutyl ketone, and cyclohexanone; alcohol solvents such as ethanol and isopropanol; and ester solvents such as ethyl acetate and butyl acetate. Inter alia, aromatic hydrocarbon solvents such as toluene and xylene are preferred from the aspects of productivity and manufacturing operation. The organic solvent is preferably used in an amount of 10 to 80 wt%, preferably 20 to 70 wt% based on the total weight of the composition. From the aspect of VOC reduction, it is desirable to decrease the amount of the organic solvent used. Since the copolymer has a low viscosity, the amount of organic solvent used can be reduced.

The copolymer is suited for antifouling paints, especially effective for antifouling paints to ship hulls and fishing nets. The antifouling paint may be prepared by adding an antifouling agent, a leaching control agent, and other additives to the copolymer and the organic solvent and mixing and dispersing them.

The antifouling agent is not particularly limited as long as it has biocidal and repellent effects to fouling marine organisms. Examples include copper(I) oxide, copper rhodanide, copper pyrithione, and zinc pyrithione.

The leaching control agent is not particularly limited as long as it enhances leaching of the antifouling agent from the antifouling coating and improves static antifouling properties. Examples include rosin derivatives such as gum rosins, wood rosins, hydrogenated rosins, and disproportionated rosins, aliphatic and cycloaliphatic monocarboxylic acids, and derivatives and metal salts of these monocarboxylic acids. Examples of the monocarboxylic acid compound include naphthenic acid, cycloalkenylcarboxylic acid, bicycloalkenylcarboxylic acid, versatic acid, trimethylisobutenylcyclohexenecarboxylic acid, stearic acid, hydroxystearic acid, salicylic acid, and metal salts thereof.

Further, other additives such as pigments, plasticizers, sag-control agents, anti-settling agents and dehydrating agents may be added to the antifouling paint composition, if necessary. The pigment is not particularly limited as long as it can adjust the color of the antifouling coating or impart the desired color. Any organic or inorganic pigments may be used. Suitable organic pigments include Carbon Black, Naphthol Red, and Phthalocyanine Blue. Suitable inorganic pigments include red iron oxide, talc, titanium oxide, silica, calcium carbonate, barium sulfate, mica, and clay. In order to improve the effect of preventing color unevenness of an antifouling coating, a pigment dispersant may be added. Typical of the organic pigment dispersant are aliphatic amines and organic acids. Typical of the inorganic pigment dispersant is ethylsilicate. The plasticizer is not particularly limited as long as it can improve the crack resistance of an antifouling coating. Suitable plasticizers include chlorinated paraffins, petroleum resins, ketone resins, tricresyl phosphate (TCP), polyvinyl ether, and dialkyl phthalates. The sag-control agent is not particularly limited as long as it can suppress sagging when the antifouling paint composition is applied to a structure. Suitable sag-control agents include amide wax, hydrogenated castor oil wax, and finely divided synthetic silica. The anti-settling agent is not particularly limited as long as it can prevent precipitation in the antifouling paint composition during storage. Typical of the anti-settling agent is polyethylene oxide wax. The dehydrating agent is not particularly limited as long as it can prevent viscosity buildup during storage. A typical dehydrating agent is ethyl silicate.

The antifouling paint composition using the copolymer of the invention may be prepared by any well-known methods. For example, the antifouling paint composition may be prepared by adding the copolymer and other components to a milling vessel at a time or in any desired order and mixing them by a well-known stirring and mixing means. Suitable stirring and mixing means include a high speed disperser, sand grind mill, basket mill, and ball mill.

### EXAMPLE

Examples of the invention are given below by way of illustration and not by way of limitation. The kinematic viscosity (in cSt) of a copolymer solution is measured at the liquid temperature of 25°C by a Ubbelohde viscometer (Sibata Scientific Technology Ltd.).

### Example 1

### Synthesis of copolymer A-1

A 100-ml four-neck round bottom flask equipped with a reflux condenser, thermometer, and stirrer was purged with nitrogen and charged with 5.0 g (0.0581 mol) of methyl acrylate, 5.0 g (0.0219 mol) of triisopropylsilyl acrylate, 190.9 mg (1.095 mmol) of methyl(trimethylsilyl)dimethylketene acetal, and 10.0 g of xylene. To the flask, 10.8 mg (0.024 mmol) of 2,3,4,5,6-pentafuluorophenylbis(trifluoromethanesulfonyl)methane in a small amount of xylene was added at room temperature. The solution was stirred for 30 minutes. A small amount of methanol was then added to quench the reaction, obtaining a solution of copolymer A-1 in a substantially quantitative manner. The kinematic viscosity, Mn, Mw, and Mw/Mn of copolymer A-1 are shown in Table 1.

### Examples 2 and 3

### Synthesis of copolymers A-2 and A-3

A solution of copolymer A-2 or A-3 was obtained from polymerization reaction by the same method as in Example 1 aside from using the acrylate, triisopropylsilyl acrylate, polymerization initiator, catalyst, and organic solvent shown in Table 1. The kinematic viscosity, Mn, Mw, and Mw/Mn of copolymers A-2 and A-3 are shown in Table 1.

### Example 4

### Synthesis of copolymer A-4

A 100-ml four-neck round bottom flask equipped with a reflux condenser, thermometer, and stirrer was purged with nitrogen and charged with 2.4 g (0.0581 mol) of methyl methacrylate, 2.4 g (0.0219 mol) of triisopropylsilyl methacrylate, 122.0 mg (0.70 mmol) of methyl(trimethylsilyl)dimethylketene acetal, and 5.0 g of tetrahydrofuran. To the flask, 6.8 mg (0.024 mmol) of tetrabutylammonium bibenzoate in a small amount of tetrahydrofuran was added at 65°C. The solution was stirred for 30 minutes. A small amount of methanol was then added to quench the reaction, obtaining a solution of a copolymer in a substantially quantitative manner. Tetrahydrofuran was distilled off from the reaction solution under vacuum. Xylene, 9.6 g, was added to the residue, obtaining a solution of copolymer A-4. The kinematic viscosity, Mn, Mw, and Mw/Mn of copolymer A-4 are shown in Table 1.

### Example 5

### Synthesis of copolymer A-5

A solution of copolymer A-5 was obtained from polymerization reaction by the same method as in Example 4 aside from using the methacrylate, triisopropylsilyl methacrylate, polymerization initiator, catalyst, and organic solvent shown in Table 1. The kinematic viscosity, Mn, Mw, and Mw/Mn of copolymer A-5 are shown in Table 1.

### Example 6

### Synthesis of copolymer A-6

A 100-ml four-neck round bottom flask equipped with a reflux condenser, thermometer, and stirrer was purged with nitrogen and charged with 5.0 g (0.050 mol) of methyl methacrylate, 5.0 g (0.021 mol) of triisopropylsilyl methacrylate, 195.1 mg (0.001 mol) of ethyl 2-bromoisobutyrate, 143.5 mg (0.001 mol) of copper(I) bromide, 230.4 mg (0.001 mmol) of 1,1,4,7,10,10-hexamethyltriethylenetetramine, and 10.0 g of xylene. The solution was heated and stirred at 85°C for 18 hours, obtaining a solution of copolymer A-6. The kinematic viscosity, Mn, Mw, and Mw/Mn of copolymer A-6 are shown in Table 2.

### Example 7

### Synthesis of copolymer A-7

A 100-ml four-neck round bottom flask equipped with a reflux condenser, thermometer, and stirrer was purged with nitrogen and charged with 3.0 g (0.030 mol) of methyl methacrylate, 4.0 g (0.017 mol) of triisopropylsilyl methacrylate, 3.0 g (0.021 mol) of 2-methoxyethyl methacrylate, 195.1 mg (0.001 mol) of ethyl 2-bromoisobutyrate, 143.5 mg (0.001 mol) of copper(I) bromide, 230.4 mg (0.001 mmol) of 1,1,4,7,10,10-hexamethyltriethylenetetramine, and 10.0 g of xylene. The solution was heated and stirred at 80°C for 7 hours, obtaining a solution of copolymer A-7. The kinematic viscosity, Mn, Mw, and Mw/Mn of copolymer A-7 are shown in Table 2.

### Example 8

### Synthesis of copolymer A-8

A 100-mi four-neck round bottom flask equipped with a reflux condenser, thermometer, and stirrer was purged with nitrogen and charged with 3.0 g (0.030 mol) of methyl methacrylate, 4.0 g (0.017 mol) of triisopropylsilyl methacrylate, 3.0 g (0.021 mol) of 2-methoxyethyl methacrylate, 403.7 mg (0.001 mol) of 4-cyano-4-[(dodecylsulfanylthiocarbonyl)sulfanyl]pentanoic acid, 32.8 mg (0.0002 mol) of azobisisobutyronitrile, and 10.0 g of xylene. The solution was heated and stirred at 80°C for 10 hours, obtaining a solution of copolymer A-8. The kinematic viscosity, Mn, Mw, and Mw/Mn of copolymer A-8 are shown in Table 2.

### Example 9

### Synthesis of copolymer A-9

A 100-ml four-neck round bottom flask equipped with a reflux condenser, thermometer, and stirrer was purged with nitrogen and charged with 3.0 g (0.030 mol) of methyl methacrylate, 4.0 g (0.018 mol) of triisopropylsilyl acrylate, 3.0 g (0.021 mol) of 2-methoxyethyl methacrylate, 403.7 mg (0.001 mol) of 4-cyano-4-[(dodecylsulfanylthiocarbonyl)sulfanyl]pentanoic acid, 32.8 mg (0.0002 mol) of azobisisobutyronitrile, and 10.0 g of xylene. The solution was heated and stirred at 80°C for 10 hours, obtaining a solution of copolymer A-9. The kinematic viscosity, Mn, Mw, and Mw/Mn of copolymer A-9 are shown in Table 2.

### Comparative Example 1

### Synthesis of copolymer B-1

A 100-ml four-neck round bottom flask equipped with a reflux condenser, thermometer, and stirrer was purged with nitrogen and charged with 60 g of xylene. With stirring at 85±5°C, a mixture of 30.0 g (0.348 mol) of methyl acrylate, 30.0 g (0.131 mol) of triisopropylsilyl acrylate and 0.6 g of 2,2'-azobis(2-methylbutyronitrile) was added dropwise over 2.5 hours. The solution was stirred for one hour at the temperature. Thereafter, 0.6 g of 2,2'-azobis(2-methylbutyronitrile) was added to the solution, which was stirred for a further 2 hours, obtaining a solution of copolymer B-1. The kinematic viscosity, Mn, Mw, and Mw/Mn of copolymer B-1 are shown in Table 1.

### Comparative Examples 2 and 3

### Synthesis of copolymers B-2 and B-3

A solution of copolymer B-2 or B-3 was obtained from polymerization reaction by the same method as in Comparative Example 1 aside from using the acrylate, triisopropylsilyl acrylate, polymerization initiator, and organic solvent shown in Table 1. The kinematic viscosity, Mn, Mw, and Mw/Mn of copolymers B-2 and B-3 are shown in Table 1.

### Comparative Example 4

### Synthesis of copolymer B-4

A 100-ml four-neck round bottom flask equipped with a reflux condenser, thermometer, and stirrer was purged with nitrogen and charged with 6 g of xylene. With stirring at 85±5°C, a mixture of 3.0 g (0.0348 mol) of methyl methacrylate, 3.0 g (0.131 mol) of triisopropylsilyl methacrylate and 0.6 g of 2,2'-azobis(2-methylbutyronitrile) was added dropwise over 2.5 hours. The solution was stirred for one hour at the temperature. Thereafter, 0.6 g of 2,2'-azobis(2-methylbutyronitrile) was added to the solution, which was stirred for a further 2 hours. Xylene, 6 g, was added thereto, obtaining a solution of copolymer B-4. The kinematic viscosity, Mn, Mw, and Mw/Mn of copolymer B-4 are shown in Table 1.

### Comparative Example 5

### Synthesis of copolymer B-5

A solution of copolymer B-5 was obtained from polymerization reaction by the same method as in Comparative Example 4 aside from using the methacrylate, triisopropylsilyl methacrylate, polymerization initiator, and organic solvent shown in Table 1 and then adding the predetermined amount of xylene to the reaction solution. The kinematic viscosity, Mn, Mw, and Mw/Mn of copolymer B-5 are shown in Table 1.

**Table 1**

| | | Example | | | | | Comparative Example | | | | |
|---|---|---|---|---|---|---|---|---|---|---|---|
| | | 1 | 2 | 3 | 4 | 5 | 1 | 2 | 3 | 4 | 5 |
| (Meth)acrylate (wt%) | Methyl acrylate | 50 | 30 | 30 | | | 50 | 30 | 30 | | |
| | 2-Methoxyethyl acrylate | | 20 | 10 | | | | 20 | 10 | | |
| | Methyl methacrylate | | | | 50 | 30 | | | | 50 | 30 |
| | 2-Methoxyethyl methacrylate | | | | | 30 | | | | | 30 |
| Triisopropylsilyl (meth)acrylate (wt%) | Triisopropylsilyl acrylate | 50 | 50 | 60 | | | 50 | 50 | 60 | | |
| | Triisopropylsilyl methacrylate | | | | 50 | 40 | | | | 50 | 40 |
| Polymerization initiator (wt%) | Methyl(trimethylsilyl)-dimethylketene acetal | 1.9 | 2.5 | 2.5 | 2.5 | 2.5 | | | | | |
| | 2,2'-Azobis(2-methyl-butyronitrile) | | | | | | 0.02 | 0.02 | 0,02 | 0.02 | 0.02 |
| Catalyst (wt%) | 2,3,4,5,6-Pentafuluoro-phenylbis(trifluoromethane-sulfonyl)methane | 0.11 | 0.12 | 0.12 | | | | | | | |
| | tetrabutylammonium bibenzoate | | | | 0.14 | 0.14 | | | | | |
| Organic solvent (wt%) | Xylene | 100 | 100 | 100 | 200 | 200 | 100 | 100 | 100 | 200 | 200 |
| Copolymer solution | Kinematic viscosity (cSt) | 40 | 18 | 29 | 30 | 40 | 71 | 58 | 112 | 49 | 95 |
| | Mn (×10²) | 100 | 90 | 120 | 110 | 120 | 90 | 80 | 82 | 120 | 100 |
| | Mw (×10²) | 115 | 108 | 135 | 135 | 140 | 340 | 184 | 380 | 320 | 320 |
| | Mw/Mn | 1.15 | 1.20 | 1.13 | 1.23 | 1.17 | 3.78 | 2.30 | 4.63 | 2.67 | 3.20 |
| | Designation of copolymer in solution | A-1 | A-2 | A-3 | A-4 | A-5 | B-1 | B-2 | B-3 | B-4 | B-5 |

**Table 2**

| | | Example | | | |
|---|---|---|---|---|---|
| | | 6 | 7 | 8 | 9 |
| (Meth)acrylate (wt%) | Methyl methacrylate | 50 | 30 | 30 | 30 |
| | 2-Methoxyethyl methacrylate | | 30 | 30 | 30 |
| Triisopropylsilyl (meth)acrylate (wt%) | Triisopropylsilyl methacrylate | 50 | 40 | 40 | |
| | Triisopropylsilyl acrylate | | | | 40 |
| Radical initiator (wt%) | 2,2'-Azobis(2-methylbutyronitrile) | | | 0.3 | 0.3 |
| RAFT agent (wt%) | 4-Cyano-4-[(dodecylsulfanylthiocarbonyl)-sulfanyl]pentanoic acid | | | 4.0 | 4.0 |
| Heavy metal salt (wt%) | Copper(I) bromide | 1.4 | 1.4 | | |
| ATRP initiator (wt%) | Ethyl 2-bromoisobutyrate | 2.0 | 2.0 | | |
| Ligand (wt%) | 1,1,4,7,10,10-Hexamethyltriethylenetetramine | 2.3 | 2.3 | | |
| Organic solvent (wt%) | Xylene | 200 | 200 | 200 | 200 |
| Copolymer solution | Kinematic viscosity (cSt) | 18 | 42 | 29 | 39 |
| | Mn (×10²) | 49 | 81 | 77 | 75 |
| | Mw (×10²) | 67 | 120 | 92 | 99 |
| | Mw/Mn | 1.37 | 1.40 | 1.19 | 1.33 |
| | Designation of copolymer in solution | A-6 | A-7 | A-8 | A-9 |

As seen from Table 1, copolymers A-1, A-2, and A-3 in Examples 1 to 3 have a lower kinematic viscosity than copolymers B-1, B-2, and B-3 in Comparative Examples 1 to 3.

Typically copolymers have a high kinematic viscosity. When such copolymers are used for paints, they must be diluted with organic solvents. Copolymers having a lower kinematic viscosity need a less amount of organic solvent for dilution.

As seen from Tables 1 and 2, copolymers A-4, A-5, A-6, A-7, A-8, and A-9 in Examples 4 to 9 also have a lower kinematic viscosity than copolymers B-4 and B-5 in Comparative Examples 4 and 5. It has been demonstrated that using the inventive copolymer, the amount of organic solvent needed for dilution is reduced.

Although some preferred embodiments have been described, many modifications and variations may be made thereto in light of the above teachings.

## Claims

1. A copolymer of monomers containing triisopropylsilyl (meth)acrylate having the general formula (1) and a (meth)acrylic acid derivative, the copolymer having a number average molecular weight of 6,000 to 100,000 and a polydispersity index (Mw/Mn) of up to 1.6, 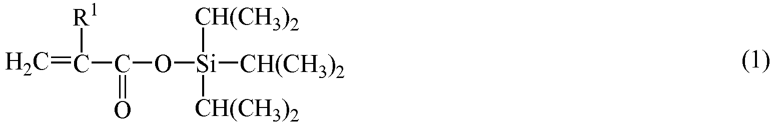
wherein R¹ is hydrogen or methyl, and
the number average molecular weight and the polydispersity index are determined by gel permeation chromatography versus polystyrene standards, according to the method mentioned in the specification.

2. The copolymer of claim 1 wherein the (meth)acrylic acid derivative has the general formula (2): 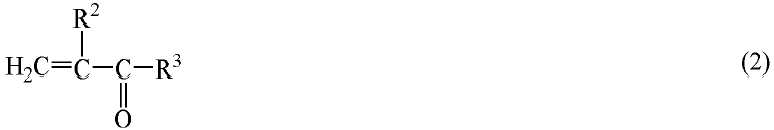 wherein R² is hydrogen or methyl and R³ is a C₁-C₂₀ alkoxy group, a C₆-C₂₀ aryloxy group, a C₁-C₂₀ monovalent hydrocarbon group which may contain at least one divalent moiety selected from -O-, -S- and -NR- wherein R is hydrogen or a C₁-C₂₀ monovalent hydrocarbon group, with the proviso that heteroatoms such as oxygen, sulfur and nitrogen do not adjoin, and which may be substituted with silyl, carbonyl or halogen, an amino group, a siloxy group (exclusive of triisopropylsiloxy), a halogen atom or a hydroxyl group.

3. The copolymer of claim 1 or 2, comprising repeating units having the general formula (3): 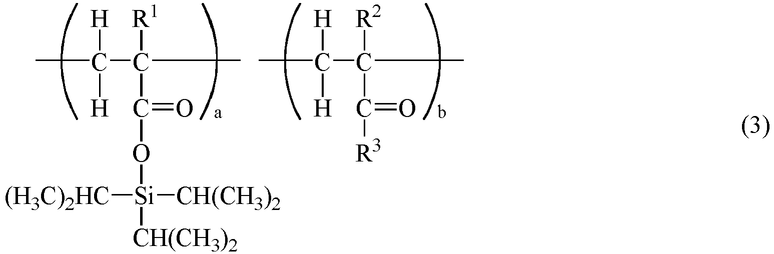 wherein R¹ to R³ are as defined above and a and b are numbers in the range: 0.2 ≤ a ≤ 0.8, 0.2 ≤ b ≤ 0.8, and a+b = 1.

4. The copolymer of claim 1 or 2, comprising repeating units having the general formula (4): 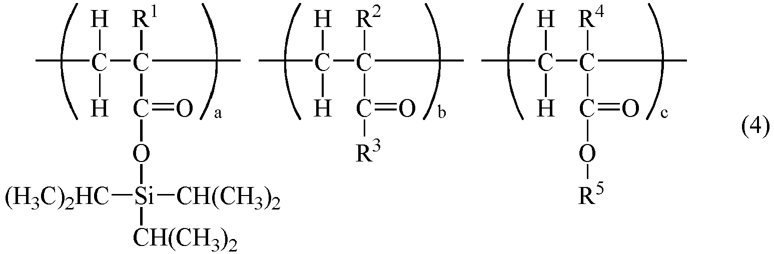 wherein R¹ to R³ are as defined above, R⁴ is hydrogen or methyl, a, b and c are numbers in the range: 0.2 ≤ a ≤ 0.8, 0.2 ≤ b ≤ 0.8, 0.2 ≤ c ≤ 0.8, and a+b+c = 1, and R⁵ is a group having the general formula (5) or (6): 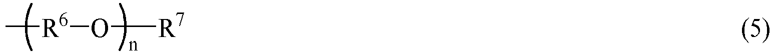 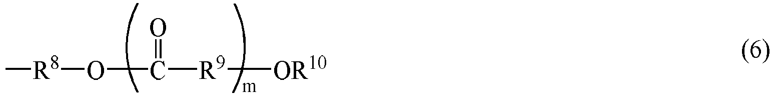 wherein R⁶ is a C₁-C₂₀ divalent hydrocarbon group which may contain -O-, with the proviso that oxygen atoms do not adjoin, R⁷ is hydrogen or a C₁-C₂₀ monovalent hydrocarbon group, n is an integer of 1 to 15, R⁸ and R⁹ each are a C₁-C₂₀ divalent hydrocarbon group, R¹⁰ is hydrogen or a C₁-C₂₀ monovalent hydrocarbon group, and m is an integer of 1 to 15.

5. A composition comprising the copolymer of any one of claims 1 to 4 and an organic solvent.

6. The composition of claim 5 wherein the organic solvent is an aromatic hydrocarbon solvent.

7. Use of the composition of claim 5 or 6 as antifouling paint.

8. A method for preparing the copolymer of any one of claims 1 to 4, comprising the step of effecting group-transfer polymerization of monomers containing triisopropylsilyl (meth)acrylate having the formula (1) defined above and a (meth)acrylic acid derivative in the presence of a catalyst using a silylketene acetal having the general formula (7) as an initiator, 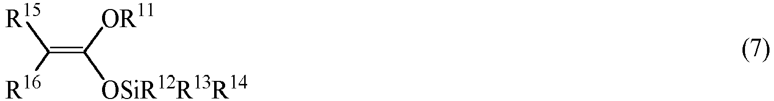 wherein R¹¹ is a C₁-C₁₀ monovalent hydrocarbon group or a substituent: SiR¹²R¹³R¹⁴, R¹² to R¹⁴ each are a C₁-C₁₀ monovalent hydrocarbon group, R¹⁵ and R¹⁶ each are hydrogen or a C₁-C₁₀ monovalent hydrocarbon group.

9. A method for preparing the copolymer of any one of claims 1 to 4, comprising the step of effecting atomic transfer radical polymerization of monomers containing triisopropylsilyl (meth)acrylate having the formula (1) defined above and a (meth)acrylic acid derivative in the presence of a heavy metal salt and a ligand using a halogen compound having the general formula (8) as an initiator, 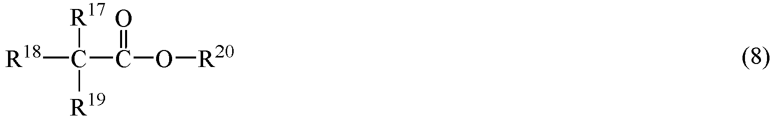 wherein R¹⁷ to R¹⁹ each are a halogen atom or C₁-C₁₀ monovalent hydrocarbon group, any one of R¹⁷ to R¹⁹ being halogen, R²⁰ is a C₁-C₂₀ monovalent hydrocarbon group which may contain oxygen, sulfur or halogen.

10. The method of claim 9 wherein the heavy metal salt is a heavy metal halide.

11. The method of claim 9 or 10 wherein the ligand is an amine ligand.

12. A method for preparing the copolymer of any one of claims 1 to 4, comprising the step of effecting reversible addition-fragmentation chain-transfer polymerization of monomers containing triisopropylsilyl (meth)acrylate having the formula (1) defined above and a (meth)acrylic acid derivative in the presence of a sulfur-containing compound using a radical compound as an initiator.

13. The method of claim 12 wherein the radical compound is an azo compound or organic peroxide.

14. The method of claim 12 or 13 wherein the sulfur-containing compound is a compound having trithiocarbonate, dithioester, thioamide, thiocarbamate or dithiocarbamate as a polymerization initiator group.

## Patentansprüche

1. Copolymer aus Monomeren, enthaltend Triisopropylsilyl(meth)acrylat mit der allgemeinen Formel (1) und ein (Meth)acrylsäure-Derivat, wobei das Copolymer ein zahlenmittleres Molekulargewicht von 6.000 bis 100.000 und einen Polydispersitätsindex (Mw/Mn) von bis zu 1,6 aufweist, 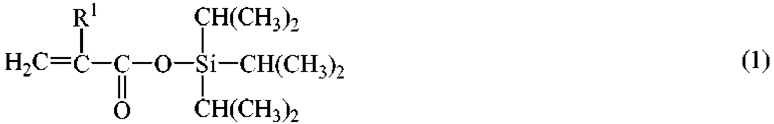
wobei R¹ Wasserstoff oder Methyl ist, und
das zahlengemittelte Molekulargewicht und der Polydispersitätsindex durch Gelpermeationschromatographie gegen Polystyrolstandards nach dem in der Beschreibung genannten Verfahren bestimmt werden.

2. Copolymer nach Anspruch 1, wobei das (Meth)acrylsäure-Derivat die allgemeine Formel (2) aufweist: 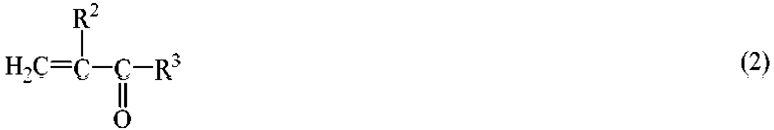 wobei R² Wasserstoff oder Methyl ist und R³ eine C₁-C₂₀-Alkoxygruppe, eine C₆-C₂₀-Aryloxygruppe, eine einwertige C₁-C₂₀-Kohlenwasserstoffgruppe ist, die mindestens eine zweiwertige Einheit, ausgewählt aus -O-, -S- und -NR- enthalten kann, wobei R Wasserstoff oder eine einwertige C₁-C₂₀-Kohlenwasserstoffgruppe ist, unter der Voraussetzung, dass Heteroatome wie etwa Sauerstoff, Schwefel und Stickstoff nicht aneinander grenzen, und die mit Silyl, Carbonyl oder Halogen, einer Aminogruppe, einer Siloxygruppe (ausgenommen Triisopropylsiloxy), einem Halogenatom oder einer Hydroxylgruppe substituiert sein können.

3. Copolymer nach Anspruch 1 oder 2, umfassend sich wiederholende Einheiten der allgemeinen Formel (3): 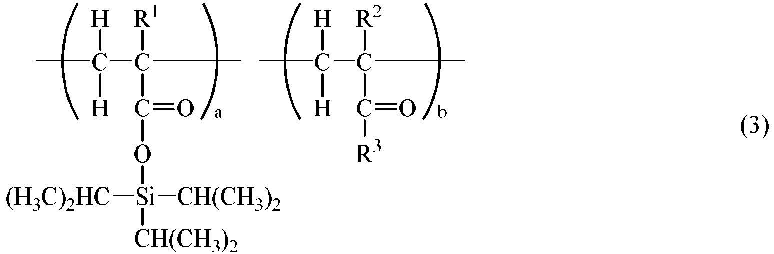 wobei R¹ bis R³ wie oben definiert sind und a und b Zahlen im Bereich: 0,2≤ a ≤0,8, 0,2≤ b ≤0,8 und a+b = 1 sind.

4. Copolymer nach Anspruch 1 oder 2, umfassend sich wiederholende Einheiten der allgemeinen Formel (4): 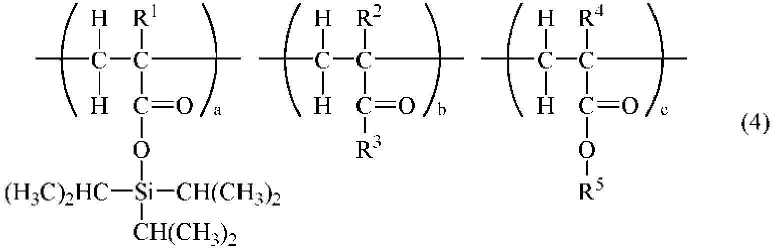 wobei R¹ bis R³ wie oben definiert sind, R⁴ Wasserstoff oder Methyl ist, a, b und c Zahlen im Bereich: 0,2≤ a ≤0,8, 0,2≤ b ≤0,8, 0,2≤ c ≤0,8, und a+b+c = 1 sind, und R⁵ eine Gruppe mit der allgemeinen Formel (5) oder (6) ist: 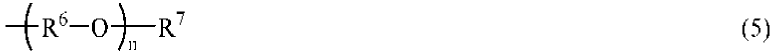 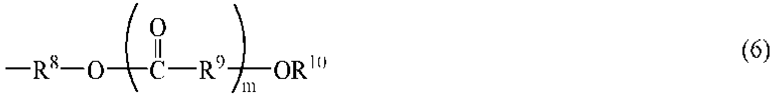 wobei R⁶ eine zweiwertige C₁-C₂₀-Kohlenwasserstoffgruppe ist, die -O- enthalten kann, unter der Voraussetzung, dass keine Sauerstoffatome aneinander grenzen, R⁷ Wasserstoff oder eine einwertige C₁-C₂₀-Kohlenwasserstoffgruppe ist, n eine ganze Zahl von 1 bis 15 ist, R⁸ und R⁹ jeweils eine zweiwertige C₁-C₂₀-Kohlenwasserstoffgruppe sind, R¹⁰ Wasserstoff oder eine einwertige C₁-C₂₀-Kohlenwasserstoffgruppe ist und m eine ganze Zahl von 1 bis 15 ist.

5. Zusammensetzung, umfassend das Copolymer nach einem der Ansprüche 1 bis 4 und ein organisches Lösungsmittel.

6. Zusammensetzung nach Anspruch 5, wobei das organische Lösungsmittel ein aromatisches Kohlenwasserstoff-Lösungsmittel ist.

7. Verwendung der Zusammensetzung von Anspruch 5 oder 6 als Antifouling-Farbe.

8. Verfahren zum Herstellen des Copolymers nach einem der Ansprüche 1 bis 4, umfassend den Schritt des Bewirkens einer Gruppentransferpolymerisation von Monomeren, die Triisopropylsilyl(meth)acrylat mit der oben definierten Formel (1) und ein (Meth)acrylsäure-Derivat enthalten, in Gegenwart eines Katalysators unter Verwendung eines Silylketenacetals mit der allgemeinen Formel (7) als Initiator, 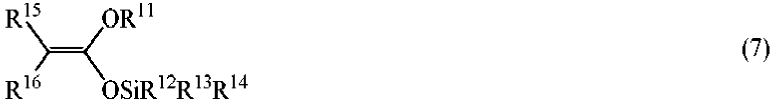 wobei R¹¹ eine einwertige C₁-C₁₀-Kohlenwasserstoffgruppe oder ein Substituent: SiR¹²R¹³R¹⁴ ist, R¹² bis R¹⁴ jeweils eine einwertige C₁-C₁₀-Kohlenwasserstoffgruppe sind, R¹⁵ und R¹⁶ jeweils Wasserstoff oder eine einwertige C₁-C₁₀-Kohlenwasserstoffgruppe sind.

9. Verfahren zum Herstellen des Copolymers nach einem der Ansprüche 1 bis 4, umfassend den Schritt des Bewirkens einer Atomtransfer-Radikalpolymerisation von Monomeren, die Triisopropylsilyl(meth)acrylat mit der oben definierten Formel (1) und ein (Meth)acrylsäure-Derivat enthalten, in Gegenwart eines Schwermetallsalzes und eines Liganden unter Verwendung einer Halogenverbindung mit der allgemeinen Formel (8) als Initiator, 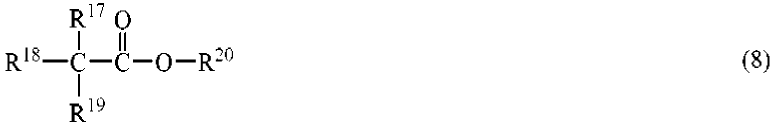 wobei R¹⁷ bis R¹⁹ jeweils ein Halogenatom oder eine einwertige C₁-C₁₀-Kohlenwasserstoffgruppe sind, wobei jedes beliebige von R¹⁷ bis R¹⁹ Halogen ist, R²⁰ eine einwertige C₁-C₂₀-Kohlenwasserstoffgruppe ist, die Sauerstoff, Schwefel oder Halogen enthalten kann.

10. Verfahren nach Anspruch 9, wobei das Schwermetallsalz ein Schwermetallhalogenid ist.

11. Verfahren nach Anspruch 9 oder 10, wobei der Ligand ein Amin-Ligand ist.

12. Verfahren zum Herstellen des Copolymers nach einem der Ansprüche 1 bis 4, umfassend den Schritt des Bewirkens einer reversiblen Addition-Fragmentierungs-Kettentransfer-Polymerisation von Monomeren, die Triisopropylsilyl(meth)acrylat mit der oben definierten Formel (1) und ein (Meth)acrylsäure-Derivat enthalten, in Gegenwart einer schwefelhaltigen Verbindung unter Verwendung einer Radikalverbindung als Initiator.

13. Verfahren nach Anspruch 12, wobei die Radikalverbindung eine Azoverbindung oder ein organisches Peroxid ist.

14. Verfahren nach Anspruch 12 oder 13, wobei die schwefelhaltige Verbindung eine Verbindung mit Trithiocarbonat, Dithioester, Thioamid, Thiocarbamat oder Dithiocarbamat als Polymerisationsinitiatorgruppe ist.

## Revendications

1. Copolymère de monomères contenant du triisopropylsilyl (méth)acrylate ayant la formule générale (1) et un dérivé d'acide (méth)acrylique, le copolymère ayant un poids moléculaire moyen en nombre de 6 000 à 100 000 et un indice de polydispersité (Mw/Mn) allant jusqu'à 1,6, 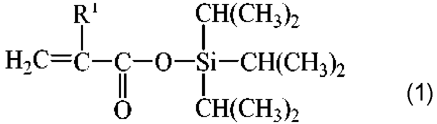
où R¹ est l'hydrogène ou le méthyle, et
le poids moléculaire moyen en nombre et l'indice de polydispersité sont déterminés par chromatographie de perméation de gel par rapport aux étalons de polystyrène, selon le procédé mentionné dans la description.

2. Copolymère selon la revendication 1, dans lequel le dérivé d'acide (méth)acrylique a la formule générale (2) : 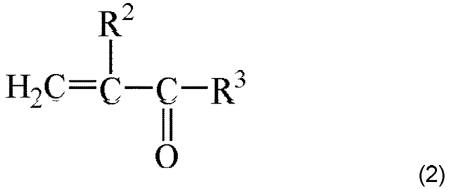 où R² est l'hydrogène ou le méthyle et R³ est un groupe alkoxy en C₁ à C₂₀, un groupe aryloxy en C₆ à C₂₀, un groupe hydrocarboné monovalent en C₁ à C₂₀, qui peut contenir au moins une fraction divalente choisie parmi -O-, -S- et -NR- où R est l'hydrogène ou un groupe hydrocarboné monovalent en C₁ à C₂₀, à condition que les hétéroatomes tels que l'oxygène, le soufre et l'azote ne soient pas adjacents, et qui peuvent être substitués par un silyle, un carbonyle ou un halogène, un groupe amino, un groupe siloxy (à l'exclusion du triisopropylsiloxy), un atome d'halogène ou un groupe hydroxyle.

3. Copolymère selon les revendications 1 ou 2, comprenant des unités répétitives ayant la formule générale (3) : 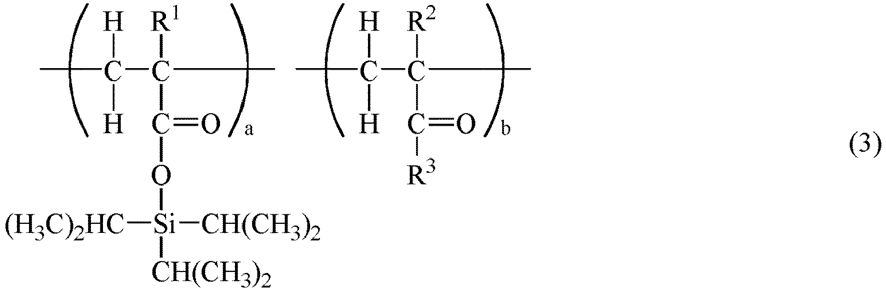 où R¹ à R³ sont tels que définis ci-dessus et a et b sont des nombres compris dans la plage : 0,2 ≤ a ≤ 0,8, 0,2 ≤ b ≤ 0,8, et a + b = 1.

4. Copolymère selon les revendications 1 ou 2, comprenant des unités répétitives ayant la formule générale (4) : 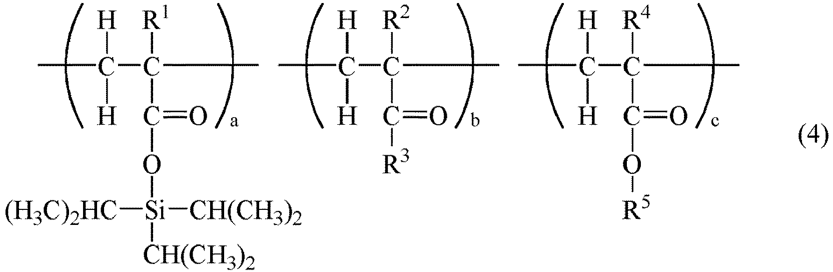 où R¹ à R³ sont tels que définis ci-dessus, R⁴ est l'hydrogène ou le méthyle, a, b et c sont des nombres compris dans la plage : 0,2 ≤ a ≤ 0,8, 0,2 ≤ b ≤ 0,8, 0,2 ≤ c ≤ 0,8, et a + b + c = 1, et R⁵ est un groupe de formule générale (5) ou (6) : 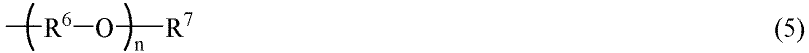 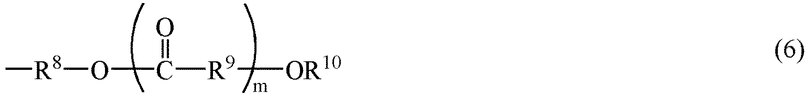 où R⁶ est un groupe hydrocarboné divalent en C₁ à C₂₀, qui peut contenir -O-, à condition que les atomes d'oxygène ne soient pas adjacents, R⁷ est l'hydrogène ou un groupe hydrocarboné monovalent en C₁ à C₂₀, n est un entier de 1 à 15, R⁸ et R⁹ sont chacun un groupe hydrocarboné divalent en C₁ à C₂₀, R¹⁰ est l'hydrogène ou un groupe hydrocarboné monovalent en C₁ à C₂₀, et m est un entier de 1 à 15.

5. Composition comprenant le copolymère selon l'une quelconque des revendications 1 à 4 et un solvant organique.

6. Composition selon la revendication 5, dans laquelle le solvant organique est un solvant hydrocarboné aromatique.

7. Utilisation de la composition selon les revendications 5 ou 6 comme peinture antisalissure.

8. Procédé de préparation du copolymère selon l'une quelconque des revendications 1 à 4, comprenant l'étape consistant à effectuer une polymérisation par transfert de groupe de monomères contenant du triisopropylsilyl (méth)acrylate ayant la formule (1) définie ci-dessus et un dérivé d'acide (méth)acrylique en présence d'un catalyseur utilisant comme initiateur un acétal de silylcétène de formule générale (7), 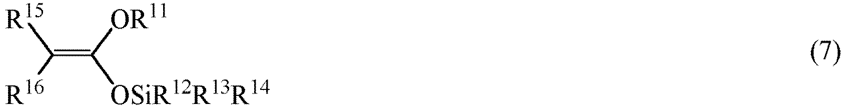 où R¹¹ est un groupe hydrocarboné monovalent en C₁ à C₁₀ ou un substituant : SiR¹²R¹³R¹⁴, R¹² à R¹⁴ sont chacun un groupe hydrocarboné monovalent en C₁ à C₁₀, R¹⁵ et R¹⁶ sont chacun l'hydrogène ou un groupe hydrocarboné monovalent en C₁ à C₁₀.

9. Procédé de préparation du copolymère selon l'une quelconque des revendications 1 à 4, comprenant l'étape consistant à effectuer une polymérisation radicalaire par transfert atomique de monomères contenant du triisopropylsilyl (méth)acrylate ayant la formule (1) définie ci-dessus et un dérivé d'acide (méth)acrylique en présence d'un sel de métal lourd et d'un ligand utilisant un composé halogène de formule générale (8) comme initiateur, 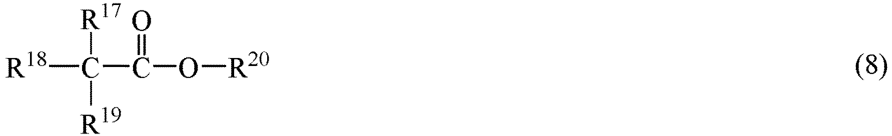 où R¹⁷ à R¹⁹ sont chacun un atome d'halogène ou un groupe hydrocarboné monovalent en C₁ à C₁₀, l'un quelconque de R¹⁷ à R¹⁹ étant un halogène, R²⁰ est un groupe hydrocarboné monovalent en C₁ à C₂₀ qui peut contenir de l'oxygène, du soufre ou un halogène.

10. Procédé selon la revendication 9, dans lequel le sel de métal lourd est un halogénure de métal lourd.

11. Procédé selon les revendications 9 ou 10, dans lequel le ligand est un ligand amine.

12. Procédé de préparation du copolymère selon l'une quelconque des revendications 1 à 4, comprenant l'étape consistant à effectuer une polymérisation par transfert de chaîne d'addition-fragmentation réversible de monomères contenant du triisopropylsilyl (méth)acrylate ayant la formule (1) définie ci-dessus et un dérivé d'acide (méth)acrylique en présence d'un composé soufré utilisant un composé radicalaire comme initiateur.

13. Procédé selon la revendication 12, dans lequel le composé radicalaire est un composé azoïque ou un peroxyde organique.

14. Procédé selon les revendications 12 ou 13, dans lequel le composé soufré est un composé ayant du trithiocarbonate, du dithioester, du thioamide, du thiocarbamate ou du dithiocarbamate comme groupe initiateur de la polymérisation.
